# EUROPEAN PATENT SPECIFICATION

(11) **EP 1 893 037 B1**
(45) Date of publication and mention of the grant of the patent: **31.12.2008**
(21) Application number: 06742442.4
(22) Date of filing: 31.05.2006
(51) Int. Cl.: A23J 1/00, A23J 1/04, A23J 1/16

(54) **A PROCESS AND A PROCESS UNIT FOR SEPARATING AT LEAST PROTEINS FROM AN ORGANIC RAW MATERIAL**
VERFAHREN UND VERFAHRENSEINHEIT FÜR DIE ABTRENNUNG VON ZUMINDEST PROTEINEN VON EINEM ORGANISCHEN ROHSTOFF
PROCEDE ET UNITE DE TRAITEMENT POUR SEPARER AU MOINS DES PROTEINES D'UNE MATIERE PREMIERE ORGANIQUE

(30) Priority: 31.05.2005 DK 200500787
(43) Date of publication of application: 05.03.2008
(73) Proprietor: Landia A/S, 6940 Lem St (DK)
(72) Inventor: HJULMAND, Poul, DK-6940 Lem St. (DK); TOBLER, Kurt, DK-6900 Skjern (DK); LARSEN, Steen, Buhl, DK-6900 Skjern (DK)
(74) Representative: Tellefsen, Jens J.
(86) International application number: PCT/DK2006/000304
(87) International publication number: WO 2006/128466

(56) References cited:
- WO-A-20/05102068
- CH-A- 692 057
- US-A- 2 580 595
- US-A- 4 379 083
- US-A- 5 113 755
- US-A1- 2002 076 468

## Description

### Background of the invention

The present invention relates to a process as well as a process unit used for the separation of at least proteins from an organic raw material.

In food processing and especially where organic raw materials such as cattle, pigs, chicken, fish and the like are involved a substantial amount of organic waste is produced, i.e. bones, fat, etc. In addition to the prime cuts, filets, etc., a certain amount of offal is left-over. Depending on the origin of the offal, i.e. whether it stems from cattle, pigs, chickens or fish, they contain various amounts of substances which if refined and reclaimed, may be used as natural additives to further processing or different food processing steps. It may therefore be advantageous to regain these materials and turn them into valuable additives instead of having to dispose of such waste with the expenses involved.

When the offal stems from pigs and especially cattle, the bone part of this offal makes it difficult to reuse as the bones are relatively hard and, therefore, makes economic use of the organic, matter between the bones difficult to justify. For other types of offal such as for example fish and especially salmon and trout, the oil content in the offal is an obstruction to regaining proteins, vitamins and other desirable substance in that the oil fraction is not separated from the other useful substances, but it is an integrated part of the offal matrix. For chicken offal, the remaining organic fraction is limited and therefore from an economic point of view, regaining of the desirable substances has not been considered feasible.

Consequently, there is a need for a process as well as a process unit which in an economic feasible manner makes it possible to regain the useful substances from what up until now has been considered organic waste, or which through other processes in the art has not yielded enough to find widespread use.

In particular for organic matter containing substantially solid or hard components such as bones and the like, specials problems arise.

A process unit and a process have already been suggested by the same applicant in WO2005/102068. Operation of this inventive process unit has indicated that in particular situations special problems arise. Among these problems is especially the running of the process unit when the organic matter contains substantially solid matter such as bones, wood, plastics and the like. This matter will, due to the placement of the drain at the very bottom of the sloping bottom of the reactor agglomerated in the lower section, and in particular in the pipe leading to the shredder and pump, and furthermore in the pump and shredder.

A process unit according to the preamble of claim 1 is known from US-A-4379083.

The agglomeration of hard substances in the pump and shredder in turn requires a substantial supply of power in order to initiate operation of the pump/shredder. This in turn requires that the power supply is dimensioned to the peak load, and that the pump and/or shredder is dimensioned such that the power transformed to the pump and/or shredder may be translated into action without damaging the pump, shredder or process unit as such.

Consequently, it is an object of the present invention to alleviate these disadvantages.

The invention addresses this problem by supplying a process unit comprising a reactor container defining a volume, said container having substantially vertical sides and a downwardly sloping bottom, and further an openable and/or removable lid structure, a knife or shredder means is arranged adjacent a drain arranged in the bottom, and the drain connects the container to a pump means, where said pump by means of a valve is connected to recirculation means or pipe means, wherein the knife or shredder means is arranged on a substantially vertical axle coaxial with the inlet to the pump, and that between the volume in the reactor, substantially coextending with the bottom of said reactor, a plate valve is arranged where said valve comprises a shut off element which is moved from an open position to a closed position, such that the volume in the reactor may be completely separated from the pump means.

The provision of a plate valve which valve may separate the pump and shredder means from the volume in the reactor assures that it is possible when initially starting up the pump means and shredder means that no hard objects such as for example bones and the like may have entered the pump and thereby cause an increase in the power necessary in order to make the pump work. The less resistance the pump is to overcome when initially being activated, the less power is needed in order to activate the pump. Therefore, by keeping the space around the pump free from matter which may otherwise hinder the pump action, the initial power requirement by the pump is lowered, and thereby also allows for a smaller pump and less strong construction in that the forces exerted by the pump are substantially smaller when only liquid in the initial start up phase.

An additional advantage of the present arrangement is the fact that the knife and shredder means also are provided in a protected environment when the offal which is to be treated in the reactor unit is introduced into the reactor. Since the reactor normally has a height of 1 meter or more, the offal loaded into the reactor will freefall to the bottom of the reactor. By this freefall, damage could occur to an otherwise not protected knife or shredder mechanism.

In a further advantageous embodiment a vane is arranged coaxially on the axis on which the knife or shredder means is arranged. By this arrangement a simple arrangement is provided where the same axle which propels the knife or shedder means also propels the vanes in order to stir the contents inside the reactor.

In a further advantageous embodiment a vane is arranged on the pump side of the shut off element. Hereby, as is the case for the knife and shredder means, the vane is protected when offal is entered into the reactor unit such that damage to the device is minimised. In a still further advantageous embodiment the leading edge of the vane is provided with a sharp edge. The sharp edge, and in particular the shape of the vane, may be such that it sucks in material, or in other words feeds and pressurises material in the reactor towards the knife or shredder means such that a continuous feed created by the sharp and leading edge of the vane towards the treatment devices, namely the knife and shredder means, is provided. In this manner, the efficiency of the device is increased in that it is assured that a current will be created having a downward direction such that material in the reactor will be forced down through the shredder and knife means during the recirculation process.

In practise, the axle on which the knife, and optionally the vane, is arranged is a vertical axis, but in other configurations the axle may have different orientations, such as for example horizontal.

In a still further advantageous embodiment of the invention the reactor is provided with a heating jacket, where heating may be supplied as electrical energy, gas heating and in particular biogas, oil or hot surplus water or steam from for example adjacent production equipment, where the heating jacket has a capacity such that the temperature of the material placed in the reactor may reach at least 95° C. In this connection, any suitable heating means may be utilised depending on the environment into which the reactor is placed. The important feature of the heating jacket is the fact that it will be able to raise the temperature of the material inside the reactor to at least 95° C in order to be able to fulfil the requirements, often set by local authorities, which stipulate that when treating materials containing blood it is necessary to increase the temperature of the material to above 92.6° C in that this is the temperature where blood coagulates. By coagulating the blood, it will be possible to remove the blood from the liquid in the reactor in that during the period where the process is dormant, see below, the different phases of the material will separate into different layers where one layer in the uppermost part of the reactor will be lighter substances such as fat and coagulated blood.

In a further advantageous embodiment the energy supplied to the heating jacket is controlled by a programmable unit, where the energy output is controlled in relation to input at least obtained from temperature measurements obtained inside the reactor. The control of the energy supplied may be an obvious feature, but by controlling the energy input and the obtained temperature inside the reactor, a correlation between the energy and corresponding temperature may be established such that any anomaly may be detected. These anomalies may be detected as pre-programmed incidents which the programmable unit will register, and issue the appropriate alarm signals such that any malfunction of the reactor unit may quickly be detected.

The invention also provides a process which is particular in that it comprises the steps of:
a) closing the shut off element;
b) arranging the raw material in the reactor container wherein the pump unit may be arranged to recirculate/stir and thereby mix the raw material arranged in the reactor container or alternatively pump out the material from the reactor container when the shut off element is opened;
c) optionally adding water to the raw material;
d) activating the pump in order to empty the volume between the shut off element and the pump;
e) opening the shut off element allowing the raw material into the shedder or knife means;
f) activating the pump means in a mixing mode for mixing the raw material and for drawing the raw material through the cutter or shredder, until a substantially homogeneous liquid mass is present in the reactor container, and, depending on the organic raw material, a substantially granular fraction;
g) adding an additive, such as for example a preservative, an enzyme or similar substance;
h) continue the mixing process until the additives have had sufficient reaction time;
i) switching the pump means from its mixing mode to its pumping out mode whereby the reactor container is emptied;
j) depending on the additive, the liquid mass and the granular fraction, when preservatives are added, are transferred to storage vessels, and, when enzymes are used as additives, the liquid mass and the granular fraction are transferred to a decanter for separation of proteins, oils and sediments;
k) the process unit is ready for the following batch, and may optionally be cleaned before the following cycle.

The process utilises the inventive unit according to the invention in a process where economically desirable substances may be derived from organic materials which otherwise would have been an economic burden for the manufacturer to unload.

The inventive process is a batch process meaning that a predetermined amount of material is treated where after a following amount of material is introduced into the process. This provides the process with a high degree of flexibility in that different materials needing different additives or having different optimum viscosities may be treated within the same process and also the same process unit, and furthermore, that only a limited amount of cleaning is necessary in order to switch from treating one type of organic raw material to treating a different kind of organic raw material.

Furthermore, the provision of cutters or shredders for example in the form of knives arranged inside a reactor container will divide the introduced organic raw material/offal into rather small particles such that it is possible to effectively treat all the organic matter present in the amount of organic raw material introduced into the reactor container.

The valve means arranged adjacent the pump will open, respectively shut off, access from the tank to the recirculation installation or the drain pipe. When the valve is in the position where the material is recirculated, the valve is said to be in mixing mode. When the valve is connecting the volume in the reactor tank to the drain, the valve is in drain mode.

Where enzymes are added for the separation of proteins or preservatives for providing a organic mass which may be preserved for a certain period of time in order to transport it or store it for further treatment, in a following process step, a thorough mixing of the additives with the introduced organic material is ensured such that a homogeneous mass is created whereby the effectiveness of the additives is maximised.

As the process which for offal usually lasts about sixty minutes is over, the enzymes have had sufficient time in order to synthesize the proteins and vitamins, the pump means which has a dual function is able to empty the reactor container as the solid parts of the organic material when this is offal, the bones, have been shredded/cut to a size which makes it possible to, without problems, pump them out of the reactor container together with the liquid mass. From the process unit, in cases where offal is being treated, the liquid mass is usually transferred to a decanter where due to the decanting process, the oil, proteins etc. are separated from the waste such as the bone fractions.

A typical process taking place in a process unit according to the present invention will be as follows: The reactor, or rather the inside of the reactor, is cleaned when a different material is to be treated inside the reactor. After cleaning and washing, the shut off element is closed such that the pump and shredder means are separated from the interior of the reactor. In the following illustrative example, the organic material entered into the reactor will be mainly bone material from which the useable meat parts have been cut. Typically, 250 litres of water will be placed in the reactor, where the water will be heated to a temperature of approximately 75° C. An equivalent amount of organic material is entered into the reactor, and after the combined material has been placed, the pump will usually be started with an energy supply of around 40 Hertz. The shut off valve, and thereby the plate element, is slowly opened such that water and organic material will be allowed to enter into the shredder mechanism. Concurrent with this, the combined material inside the reactor is heated to approximately 55° C. Tests have shown that when about 50° C are achieved, it is possible to shut off the heating elements in thai the temperature gradient through the reactor wall and inside the material usually is such that the material will be warmer in some places, and colder in other places, whereby the average will reach 55° C.

After a temperature of 55° C has been achieved, one or more enzymes are added to the mixture and the hydrolysis will progress. At this point, a switch activating the commencement of process time is switched on, and after maintaining the temperature between 35 and 55 minutes, and maintaining the pump speed equivalent to 40 Hertz, the hydrolysis is finished. The treatment time depends on the enzymes used and the characteristics of the finished product. Depending on the organic material which is entered into the reactor, the period necessary in order to create a satisfactory product varies. Test, however, have shown that both the time allowed for the hydrolysis and the speed of the pump have influence on the finished product. For material deriving from chickens, a pump speed corresponding to 40 Hertz which roughly is equivalent to 580 rounds per minute is optimum, whereas for organic materials originating from salmon, an equivalent speed of 20-25 Hertz is optimum.

The temperate is hereafter increased to 95° C for a period of approximately 10 minutes. During this, the pump is still active. Hereafter, both the shut off valve in the bottom of the reactor and the pump are stopped. For a period of approximately 30 minutes, the batch inside the reactor is left dormant. During this period, different fractions will separate in layers inside the reactor such that fat, blood and other similar substances will create a top layer, a middle layer being the protein rich soup, and below a bottom layer of bone pieces, bone nuggets and smaller hard and heavier materials will be present. The layer of fat, blood and other substances constituting the top layer in the reactor may be removed from above for example by suction, or depending on the consistency of the soup in relation to the top layer it may be left on the soup while the soup is drained through the bottom drain and through the bone layer. When part of the top layer, i.e. fat, blood and the like, enters the drained off soup material, the valve is shut off in order to maintain the soup fairly clean from these substances. The top layer may thereafter be drained off separately, and disposed of or utilised in any other way. The shut off valve is hereafter closed, and an amount of water is entered into the reactor. The pump is restarted whereby bone fragments will be suspended in the liquid, and when a complete suspension of all materials from the bottom layer has occurred, this water containing bone mass may be removed by means of the pump to a further storage facility. Hereafter, the tank is cleaned again, if necessary, or an new batch of organic material is entered into the reactor.

Under certain circumstances depending on the introduced organic raw material, it may be advantageous to add water to the raw material. It should however be noted that water is undesirable in the process as it needs to be separated from the liquid mass at a later stage which may involve an extra costly process step. If the viscosity of the liquid mass after having been made homogenous by the recirculation stirring process as well as being passed through the cutter and shredder, the addition of water to the liquid mass should be kept at a minimum and preferably avoided all together.

As the batch process is over, the liquid mass is transferred to either a storage vessel when the batch process has involved preservatives or to a decanter when enzymes have been used. In the storage vessel depending on the materials, it will be possible to store and keep the liquid mass for example until further processing or for a specified time before using the liquid mass as feed stuffs in the animal industry. Where enzymes have been used, the decanting process will separate the liquid mass into a protein, oil and sediment fraction as well as water fraction. Tests with the batch process as described above have indicated that the protein yield and the purity of proteins obtained by the processes described above by using enzymes for example manufactured by Novozymes of Denmark have a superior quality and yield compared to other processes for regenerating proteins.

The organic material may be waste from food stuff manufacturing, such as fish processing plants, slaughterhouses, meat production plants, or any other foodstuff industry, restaurants, fast-food production or retail outlets. As all these materials comprise organic material which in one way or another is constituted by proteins, vitamins, oils/fats, they are all useful ingredients in a process as described above and may advantageously be used in such a batch process. Alternatively, the organic raw material is waste water, waste from animal production or materials used in the generation of biogas or other bio fuels. This group of materials comprises ingredients which require special treatment especially with respect to possible pollutants and the like.

In a further advantageous embodiment, it has been found that when the raw material derives from slaughterhouses, fish processing plants or meat production plants, water is added up to an amount of water corresponding to the weight of the raw material. As mentioned above, it is advantageous to add as little water as possible in that the water is a non-desirable ingredient that at a later stage for example in the decantation process needs to be removed again. Therefore, when possible, as little water as possible should be added. However, in order to be able to thoroughly mix the ingredients, i.e. the meat fractions with the bone fractions as well as any other waste material from animal production or fish processing plants, it has been found that adding a certain amount of water improves the pumpability of the mass as well as the distribution of the active ingredients whether it be enzymes or preservatives throughout the entire liquid mass.

In a still further advantageous embodiment, it has been found that in order to achieve a higher yield with a shorter process time, the process should be modified such that between process steps c) and d) the temperature in the reactor container is brought to approximately 55 deg. Celsius. Especially, when enzymes are added to the liquid mass inside the reactor container naturally depending on the type of enzymes, but for most of the enzymes tested with the process unit and process as described above a good economic balance between energy consumption and process time was found to be reached when increasing the temperature in the reactor container to approximately 55° C as this is the point where the enzymes are most active.

The particular inventive feature of arranging a knife or shredder means immediately adjacent a drain where the pump has two outlets provides a number of advantages for the process unit according to the invention. Firstly, as the material to be treated is introduced into the process unit, the knife or shredder means divides the material up into finer pieces which the pump means will be able to pump together with any liquid either especially added or contained in the waste material. The shredder/knife means thereby makes it possible to transport the waste material including the divided bone parts through the drain to the pump means. The pump means is equipped with two outlets such that it may pump the liquid containing the shredded bone materials back into the reactor container or after the treatment cycle according to the process described above has finished pumping the material either to further treatment or to a storage vessel. By pumping the material back into the reactor container, the pump recirculates and thereby stirs the material in the reactor container such that a thorough mix will take place in the waste material inside the reactor container. Furthermore, as the material repeatedly passes the knife or shredder means arranged immediately adjacent the drain leading to the pump means, the hard particles such as bone and the like will repeatedly be worked over by the knife or shredder means whereby ever finer particles will be present in the liquid mass.

The downwardly sloping bottom assures that heavier particles such as bones and the like, due to the influence of gravity, will also be moved towards the shredder/knife mechanism, and thereby successively will be reduced to smaller particles due to the circulation of the liquid mass in the container.

By further shaping the reactor container such that it has substantially vertical sides and a conically shaped downwardly facing bottom, the harder particles which are not able to float on the surface will be forced both due to gravitational forces and also due to the sucking force of the pump means through the knife and/or shredder means such that all material present inside the reactor container will be worked through both the shredder/knife means and the pump means for a thorough mixing.

As the batch process as described above has finished, i.e. a thorough mixing and addition of the suitable additives have been concluded, the valve arranged in connection with the pump means is redirected such that instead of recirculating the material inside the reactor container, the liquid mass is pumped out of the process unit after which a further batch of material may be introduced into the reactor container.

The process unit, also as explained above, may be equipped with a thermal insulation jacket around at least the reactor container, and that means are provided for heating and/or cooling, and means for controlling the temperature inside the container, where said source of heating may be electrical, gas in particular biogas, oil or any other suitable source.

By providing a thermal insulation jacket in combination with means for either heating the contents inside the reactor container or cooling the same, it is possible to completely control the process inside the reactor container and thereby optimise the process such that a higher yield and/or less energy consumption and other advantages may be derived at.

Furthermore, in particular when it is desirable to treat raw material as described above where the raw material is waste water or waster from animal production or materials used in the generation of bio-gas or other bio-fuels, it may be desirable to be able to reliably achieve the temperature necessary in order to pasteurize the material.

Furthermore, when treating a number of waste materials, it is required by law that the materials through their process is brought up to a certain temperature in order to avoid spreading a bacteria and the like. This is particularly important where the process is a preserving process such that the materials after treatment will be used for further processing for example as an ingredient in food stuffs or animal feed. Also in other processes for example when waste water is treated by adding enzymes, it is possible to regain active coal which may be used in connection with water purification plants. In this case, it is also desirable to create a pure material i.e. a material which is free from other cultures of bacteria such that a pure active coal may be regained.

The source of heating may be any suitable source, but it was found that an electrical heating core outside the reactor container which typically will be made from stainless steel gives an easy controllable source of heating energy. For installations working on substances used in the process of biogas it may be advantageous to use biogas as a source of energy, and due to the construction material of the reactor chamber which will usually be steel and in particular stainless steel, a relatively good heat distribution is assured even when it derives from burning biogas, oil or other bio-fuels. In this connection, oil may be any type of oil such as oil from fossil deposits or biological oils for example fat from fish or meat production.

In a further advantageous embodiment of the process unit, agitation means are provided inside the container, and that said agitation means may be one or more vanes or wings arranged on a substantial vertical axle, that the agitation means optionally may be coupled to the pump means such that the rotational speed of the pump and the axle are substantially coupled, and that optionally a front edge of the one or more vanes or wings may be sharpened.

Both for the optimization of the process as described above and for the process unit as described herewith, it may be advantageous to be able to control the speed of the pump. If the pump moves too fast, bubbles or other hydraulically undesirable phenomenon may occur either inside the pump or in the outlet from the pump leading back to the recirculation means inside the reactor container. This may cause that the additives become inactive due to the mixing of oxygen into the mask or that the energy consumption by the pump depending on the size of the particles inside the liquid mass is not optimised such that a substantial amount of energy is wasted in the pump which again leads to unnecessary wear in the mechanical parts of the process unit. Tests with especially waste from fish processing plants and in particular with salmon have indicated that various pump speeds are desirable during a batch cycle where also the temperature inside the reactor container should be varied but mainly kept at 55° C.

In order to widen the flexibility of the present process unit, means are provided such that the temperature is controllable between 0° and 100° C. By providing control means not only for controlling the pump speed, speed of the agitation means, but also controlling the temperature, it becomes possible to create a versatile process unit which is able to operate under any temperatures such that the optimal temperature may be chosen or derived at depending on the case in point, namely what kind of raw materials that have been added, what kind of additives that are intended to be added, and what kind of result is desirable to achieve with the process.

In order to further optimize this process, the process unit is provided with an automatic pre-programmable and optionally remotely controllable dosing unit which is in communication with the interior of the container for adding water and/or enzymes and/or preservatives, and that further process control and monitoring equipment is provided in the unit, optionally connected by wire or wireless means to a remote control installation.

When the process unit is used in a standardised manner, i.e. such that all batches contain the same type of raw material for example fish waste, the entire process may be automated by providing the process unit with appropriate means such as means for dosing water, enzymes, preservatives or other additives, and at the same time, the control unit may be equipped with monitoring equipment such as for example thermocouples, flow meters for determining the viscosity of the liquid mass, video camera means for visually inspection of the inside of the container, electrodes for determining the conductivity of the mass inside the reactor or any other monitoring means which are per se known in the art. In order to be able to control the process from a central location, the dosing unit and monitoring equipment may be connected to a remote control installation by wire or wireless means. For some installations, it might be desirable to have more than one process unit and, therefore, by collecting all the data to one centrally arranged control installation, it will be possible for the personnel operating the machinery to control more than one process unit for example via a personal computer hooked up in a wire or wireless environment.

### Description of the drawing

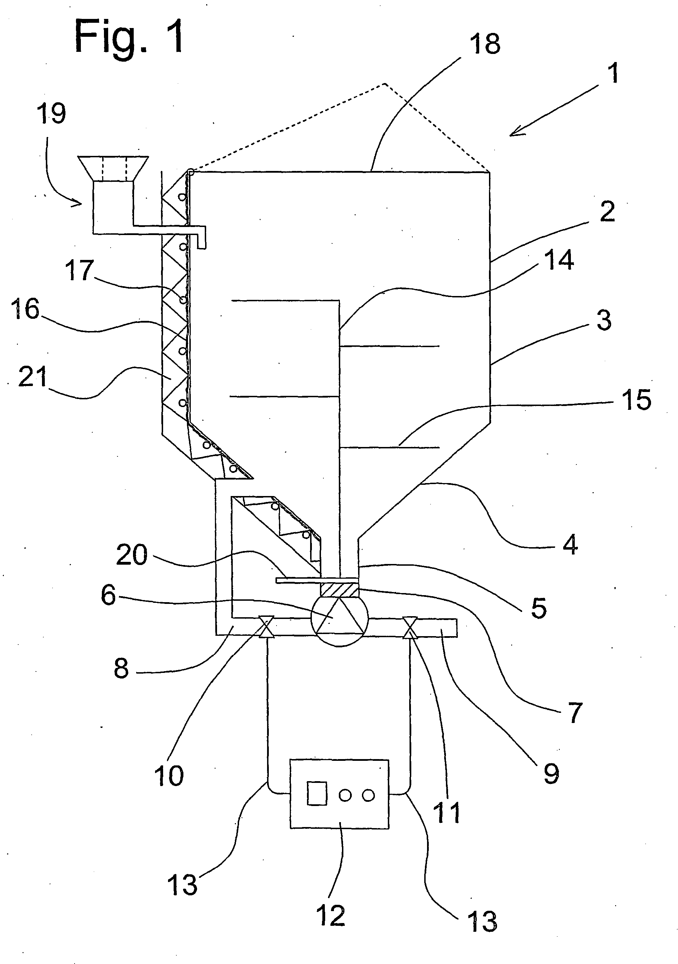

One specific embodiment of the invention will now be described with reference to the accompanying drawing wherein
fig. 1 illustrates a schematic process unit according to the invention.

In fig. 1, a process unit according to the invention is illustrated. The process unit 1 comprises a reactor container 2. The reactor container may be manufactured from any suitable material but especially stainless steel is preferred in that it is resistant to most chemicals and at the same time, it is possible to clean and rinse stainless steel to the high hygienic requirements which are prevailing within the food production industry. Alternatively, the reactor may be manufactured from glass fibre reinforced resins, plastics, especially reinforced plastics or metals such as aluminium and steel. The reactor container comprises in this particular embodiment substantially vertical wall sections 3 which are connected to a cone shaped bottom section 4. At this bottom-most part of the cone section 4, a drain 5 is arranged which is connected to a pump 6.

Either integral with the pump 6 or immediately adjacent the pump inside the drain 5, a set of knives and/or a shredding mechanism 7 is arranged. Pumps comprising a knife arrangement or a shredding mechanism are well-known in the art, and suitable pumps may be obtained from Landia A/S in Denmark.

The pump has two outlets 8,9. Either integral with the pump or arranged in each outlet 8,9, valve mechanisms 10,11 are arranged. In the illustrated embodiment in fig 1, two separate valves are provided 10,11 which are controlled by a control box 12 by electrical means illustrated by the wires 13. In this manner, it is assured that by manipulating the control box 12, the valves 10,11 may be operated to either close or open such that material placed in the reactor container 2 may, by means of the pump, be pumped out of the container and either to the outlet 9 or to the recirculation means 8. If the valve 10 is open, and the valve 11 is closed, the mass placed in the reactor container will be pumped through the outlet means 8 which serves as recirculation means. The mass is injected into the container 3 by the outlet 8 which is connected to the side of for example the cone-shaped bottom 4. This creates a mixing and stirring action in the liquid mass placed in the container 2 such that a thorough mixing of the ingredients inside the reactor container 2 may be optimised.

In addition to the stirring/mixing action created by the recirculation of the liquid mass in the container by means of the pump and the outlet 8, a substantially vertical axle 14 may be arranged inside the reactor container 2. On the axle, wings or vanes 15 may further be provided such that a thorough mixing of the liquid mass placed inside the reactor container is facilitated. The axle 14 may be coupled to the pump means 6 such that the rotational speed of the axle 14 and thereby the wings 15 is coupled to the speed of the pump 6. The coupling may either be direct or be via a gear box. Alternatively, the axle may comprise its own drive means which has not been depicted in fig. 1.

The wings or vanes are designed such that optimum mixing is achieved with a minimum of energy use. Additionally the wings or vanes may be provided with sharp front edges such that a cutting action may be achieved during the mixing, i.e. rotation of the axle 14. The shape of the vane may furthermore be such that it also creates a downwards current, whereby liquid in the reactor is forced into the shredder/knife and pump.

Interposed between the pump, shredder/knife and optionally vane means, a shut off valve 20 is arranged. The valve has a substantially horizontal shut off element. When closing the valve, the volume inside the reactor is isolated from the shredder/knife 7 and pump 6. Therefore, when starting the pump, no material is present inside the pump which may otherwise hamper the start of the pump or create unnecessary power consumption or a power peak.

The distance between the shut off valve 20 and the shredder/knife arrangement 7 may be such that the vane or wings 15, or a number of vanes or wings 15, may be accommodated in the volume in the drain 5 or bottom section 4 of the reactor 1 between the shut off valve 20 and the shredder/knife arrangement 7.

The control box 12 may be provided with further functions such as for example temperature measurement devices for example in the form of thermocouples, timers, a programmable computer unit as well as a storage and/or means for transmission of information/data from the control box 12 to a remote control base.

In order to be able to optimize the conditions inside the reactor container 2, the walls 3,4 of the container 2 may be provided with an insulation jacket 21 as illustrated on the left-hand portion of the reactor container depicted in fig. 1. Although only insulation on the left-hand side of the fig is illustrated, it is evident that in order to achieve the desired effects, the entire container or substantial parts of the container must be covered by insulation means in the shape of the insulation jacket 21.

In addition to the insulation means 21, heating means 16 in this embodiment depicted as heating pipes placed immediately adjacent the wall 3,4 of the container as illustrated. The heating means may be any type such as for example a gas heater distributing the heat in a pipe system 17. Alternatively, the pipe system will be used for cooling the container 2 in order to control the reactions inside the reactor container 2.

Generally, the means for heating and/or cooling may be any suitable means which will be able to maintain a temperature in the desired intervals for the desired reaction time.

In addition to the reactor container 2 defined by the walls 3,4, a lid 18 is provided. The lid may be pivotally mounted by means 19 such that access may be gained to the interior of the reactor container. Furthermore, the lid 18 may also be provided with a thermal insulation jacket as the rest of the container 2. The dash-lines indicate that the lid is openable but in alternative embodiments, the lid may also be removable in order to place the material to be treated inside the reactor container 2.

Additionally, a dosing unit 19 may be provided in the apparatus 1. The dosing unit 19 may be controlled either by a control box 12 or by remote control means such that depending on the materials to be treated inside the process unit 1, appropriate additives or water may be added to the reactor container 2. The dosing unit 19 may be suitable to add additives such as enzymes, preservatives or other reactants as well as water.

As the process unit 1 is suitable for a number of different processes such as for example separation processes in connection with separating proteins, oils etc. from offal where it is desirable to add enzymes which will further improve this process or other processes where it is desirable to preserve the liquid mass being produced by the system, preservatives should be added by the dosing unit 19. The dosing unit 19 must be multifunctional or must be replaceable by other suitable dosing units in order to be able to administer the suitable substances in suitable amounts. Furthermore, the dosing unit 19 may either be connected to a control box 12 as explained above or may be controllable by wires or wireless means from a remote position for example a centrally located control base.

In use, the offal or other organic raw material is placed inside the reactor container 2 in an appropriate amount corresponding to the size of the container. Thereafter, water is added if necessary, and the pump means 6 as well as the axle 14 is activated such that circulation of the raw material placed inside the reactor container is effected. During the circulation, the valve 10 is open, and the valve 11 is closed such that the raw material will be circulated through the knife arrangement 7 whereby a cutting of larger items such as bones and the like will occur through the pump means 6. The liquid mass will pass the valve means 10 and by means of the recirculation outlet 8 be injected back into the mass of raw material placed inside the reactor container 2. Due to the knives 7 arranged in the drain 5, the materials placed inside the reactor container will be divided and the more, i.e. the longer, the recirculation of material lasts, the finer the division of the particles inside the liquid mass placed in the container will be.

If appropriate, the heating means 16 or the cooling means 17 will be activated in order to reach the optimum process temperature. For example when offal is treated where enzymes are added by a dosing unit, the optimum temperature has been found to be approximately 55° C. At this temperature, the pump speed may be varied such that the pump means 6 creates a recirculation in the raw material placed in the container 2 for optimum distribution of the enzymes throughout the raw material placed inside the container. Furthermore, the vanes and/or wings 15 will further help in creating a homogenous mass. The process time for the processing of offal using enzymes in order to separate oils, proteins etc. is typically approximately 1 hour. After the process time or immediately before the process time is over, the raw material/liquid mass inside the reactor container 2 may advantageously be heated up to approximately 95° C for a very short period of time in order to stop the process and at the same time destroy any undesirable bacteria culture being present in the liquid mass. Also, at this temperature any blood present in the material will coagulate and drift towards the tope of the liquid in the reactor.

Depending on the raw material placed in the reactor, the process may be varied in order to obtain various end products. The remaining bone mass (several fractions of shredded bone material) may for example be used in agriculture as a soil improving agent. It is, however, a requirement in some areas that prior to being spread on the fields, this material must be heat treated such that the temperature is increased in the mass to approximately 70° C for an hour.

If the raw material treated in the inventive batch process is sludge or waste water, the equivalent requirement for using the end products in a bio gas reactor is that the entire material (and not only the bone mass) is heated to 70° C for an hour.

Other requirements may apply for other materials and processes, and for other end products, but the inventive process unit as disclosed will be able to address all these requirements.

For other purposes, other temperatures and process times may be appropriate, as well as the process described above may also be carried out at lower temperatures whereby the process time is prolonged.

At the end of the process, the valve 10 is closed, and at the same time, the valve 11 is open such that the pump will pump the material from inside the container 2 to further processing by pumping it out through the outlet 9. When the container 2 is empty, the valve 11 is closed and a cleaning liquid may be placed inside the container, the pump means activated and the valve 10 open such that recirculation and thereby cleaning of all interior surfaces is achieved. After the cleaning cycle, the cleaning liquid may by means of closing the valve 10 and opening the valve 11 be drained from the reactor and the process unit is thereby ready to receive a new batch of material to be treated.

## Claims

1. Process unit (1) comprising a reactor container defining a volume, said container having substantially vertical sides and a downwardly sloping bottom, **characterised by** an openable and/or removable lid structure (18), a knife or shredder means arranged adjacent a drain arranged in the bottom, the drain connecting the container to a pump means, where said pump by means of a valve is connected to recirculation means or pipe means, the knife or shredder means is arranged on a substantially vertical axle coaxial with the inlet to the pump (6), and that between the volume in the reactor and the pump means, substantially coextending with the bottom of said reactor, a plate valve (20) is arranged where said valve comprises a shut off element which is moved from an open position to a closed position, such that the volume in the reactor may be completely separated from the pump means.

2. Process unit according to claim 1 **characterised in that** a vane is arranged coaxially on the axis on which the knife or shredder means is arranged.

3. Process unit according to claim 2 **characterised in that** the vane is arranged on the pump side of the shut off element.

4. Process unit according to claim 2 or 3 **characterised in that** the vane on the leading edge is provided with a sharp edge.

5. Process unit according to any preceding claim **characterised in that** the reactor is provided with a heating jacket; where heating may be supplied as electrical energy, gas heating, in particular biogas, oil or hot surplus water or steam from for example adjacent production equipment, where the heating jacket has a capacity such that the temperature of the material placed in the reactor may reach at least 95° C.

6. Process unit according to claim 5 **characterised in that** the energy supplied to the heating jacket is controlled by a programmable unit, where the energy output is controlled in relation to input at least obtained from temperature measurements obtained inside the reactor.

7. Process using a process unit according to any of the claims 1-6 for the separation of at least proteins from an organic raw material where said material comprises hard components such as bones and the like, comprising the steps of:
a) closing the shut off element;
b) arranging the raw material in the reactor container wherein the pump unit may be arranged to recirculate/stir and thereby mix the raw material arranged in the reactor container or alternatively pump out the material from the reactor container when the shut off element is opened;
c) optionally adding water to the raw material;
d) activating the pump in order to empty the volume between the shut off element and the pump;
e) opening the shut off element allowing the raw material into the shedder or knife means;
f) activating the pump means in a mixing mode for mixing the raw material and for drawing the raw material through the cutter or shredder, until a substantially homogeneous liquid mass is present in the reactor container, and, depending on the organic raw material, a substantially granular fraction;
g) adding an additive, such as for example a preservative, an enzyme or similar substance;
h) continue the mixing process until the additives have had sufficient reaction time;
i) switching the pump means from its mixing mode to its pumping out mode whereby the reactor container is emptied;
j) depending on the additive, the liquid mass and the granular fraction, when preservatives are added, are transferred to storage vessels, and, when enzymes are used as additives, the liquid mass and the granular fraction are transferred to a decanter for separation of proteins, oils and sediments;
k) the process unit is ready for the following batch, and may optionally be cleaned before the following cycle.

## Patentansprüche

1. Prozesseinheit (1) umfassend einen Reaktorbehälter, der ein Volumen definiert, wobei der Behälter im wesentlichen senkrechte Seiten und einen nach unten geneigten Boden aufweist, **gekennzeichnet durch** eine aufmachbare und/oder abnehmbare Deckelkonstruktion (18), eine Messer- oder Schneidevorrichtung, das benachbart des im Boden angeordneten Abflusses angeordnet ist, wobei der Abfluss den Behälter mit einer Pumpenvorrichtung verbindet, wobei die Pumpe mittels eines Ventils mit einer Rezirkulationsvorrichtung oder Rohrvorrichtung verbunden ist, wobei die Messer- oder Schneidevorrichtung auf einer im wesentlichen senkrechten Achse, koaxial mit dem Einlauf der Pumpe (6) angeordnet ist, und **dadurch**, dass zwischen dem Volumen des Reaktors und in der Pumpenvorrichtung, im wesentlichen mit derselben Erstreckung wie der Boden des Reaktors, ein Plattenventil (20) dort angeordnet ist, wo das Ventil ein Absperrelement umfasst, das von einer geöffneter Position zu einer geschlossenen Position bewegt wird, so dass das Volumen im Reaktor von der Pumpenvorrichtung vollständig separiert werden kann.

2. Prozesseinheit nach Anspruch 1, **dadurch gekennzeichnet, dass** ein Flügel koaxial auf der Achse angeordnet ist, auf der die Messer- oder Schneidevorrichtung angeordnet ist.

3. Prozesseinheit nach Anspruch 2, **dadurch gekennzeichnet, dass** der Flügel an der der Pumpe zugewandten Seite des Absperrelements angeordnet ist.

4. Prozesseinheit nach Anspruch 2 oder 3, **dadurch gekennzeichnet, dass** der Flügel an der Vorderkante mit einer scharfen Kante versehen ist.

5. Prozesseinheit nach einem der vorhergehenden Ansprüche, **dadurch gekennzeichnet, dass** der Reaktor mit einem Heizmantel versehen ist, wobei Heizung als elektrische Energie, Gasheizung, insbesondere Biogas, Öl oder warmes Überschusswasser oder Dampf von z.B. benachbarter Herstellungsanlage zuführbar ist, wobei der Heizmantel eine solche Kapazität hat, dass die Temperatur des im Reaktors angeordneten Materials mindestens 95° C erreichen kann.

6. Prozesseinheit nach Anspruch 5, **dadurch gekennzeichnet, dass** die an den Heizmantel zugeführte Energie von einer programmierbaren Einheit gesteuert wird, in der die Energieleistung im Verhältnis zum mindestens vom Temperaturmessen innerhalb des Reaktors erhaltenen Eingaben gesteuert wird.

7. Verfahren, das eine Prozesseinheit nach einem der Ansprüche 1 bis 6 zum Separieren von zumindest Proteinen von einem organischen Rohmaterial verwendet, wobei das Material harte Komponente sowie Knochen und ähnliches enthält, umfassend die Schritte:
a) Absperren des Absperrelements;
b) Anordnen des Rohmaterials im Reaktorbehälter, in dem die Pumpeneinheit zum Rezirkulieren/Umrühren und dadurch Vermischen des im Reaktorbehälter angeordneten Rohmaterials oder alternativ zum Pumpen des Materials aus dem Reaktorbehälter heraus, wenn das Absperrventil geöffnet ist, eingerichtet werden kann;
c) wahlweise dem Rohmaterial Wasser zusetzen;
d) Betätigung der Pumpe, um das Volumen zwischen dem Absperrelement und der Pumpe zu entleeren;
e) Öffnen des Absperrelements und dadurch das Rohmaterial in die Schneide- oder Messervorrichtung einleiten;
f) Betätigung der Pumpenvorrichtung in einem Vermischenmodus, um das Rohmaterial zu vermischen und das Rohmaterial durch die Messer- oder Schneidevorrichtung zu ziehen, bis eine im wesentlichen homogene Flüssigkeitsmenge im Reaktorbehälter und, abhängig vom organischen Rohmaterial, eine im wesentlichen körnige Fraktion auftreten;
g) Zumischen eines Additivs, sowie z.B. eines Konservierungsmittels, eines Enzyms oder einer ähnlichen Substanz;
h) Fortsetzen des Vermischenprozesses, bis die Additive ausreichende Reaktionszeit gehabt hat;
i) Umschalten der Pumpenvorrichtung vom seinem Vermischenmodus auf seinen Auspumpenmodus, wobei der Reaktorbehälter entleert wird;
j) abhängig vom Additiv, Überführen der Flüssigkeitsmenge und der körnigen Fraktion zu Standgefäßen beim Zusatz von Konservierungsmitteln, und Überführen der Flüssigkeitsmenge und der körnigen Fraktion zu einem Dekanter zum Separieren von Proteinen, Ölen und Bodensätzen bei Verwendung von Enzymen als Additive;
k) der Prozesseinheit ist für die folgende Portion bereit und kann wahlweise vor dem folgenden Zyklus gereinigt werden.

## Revendications

1. Unité de traitement (1) comprenant un conteneur de réacteur définissant un volume, ledit conteneur ayant des côtés sensiblement verticaux et un fond incliné vers le bas, et **caractérisée par** une structure de couvercle ouvrable et/ou amovible (18), des moyens de découpage ou de déchiquetage agencés de façon adjacente à un drain agencé sur le fond, le drain reliant le conteneur à des moyens de pompage, ladite pompe étant reliée au moyen d'un clapet à des moyens de circulation ou des moyens formant tuyau, les moyens de découpage ou de déchiquetage étant agencés sur un axe sensiblement vertical coaxial avec l'entrée de la pompe (6), et en ce que, entre le volume dans le réacteur et les moyens de pompage, en coextension sensible avec le fond dudit réacteur, est agencé un clapet plat (20), ledit clapet comprenant un élément d'arrêt qui est déplacé d'une position ouverte à une position fermée, de telle sorte que le volume dans le réacteur puisse être complètement séparé des moyens de pompage.

2. Unité de traitement selon la revendication 1, **caractérisée en ce qu'**une pale est agencée de façon coaxiale sur l'axe sur lequel sont agencés les moyens de découpage ou de déchiquetage.

3. Unité de traitement selon la revendication 2, **caractérisée en ce que** la pale est agencée sur le côté de pompage de l'élément d'arrêt.

4. Unité de traitement selon la revendication 2 ou 3, **caractérisée en ce que** la pale sur le bord avant est dotée d'un bord acéré.

5. Unité de traitement selon l'une quelconque des revendications précédentes, **caractérisée en ce que** le réacteur est doté d'une chemise chauffante, le chauffage pouvant être assuré par énergie électrique, chauffage au gaz, en particulier, au biogaz, par l'huile ou l'eau ou la vapeur chaude en excédent provenant, par exemple, de l'équipement de production adjacent, la chemise chauffante ayant une capacité telle que la température de la matière placée dans le réacteur peut atteindre au moins 95 °C.

6. Unité de traitement selon la revendication 5, **caractérisée en ce que** l'énergie fournie à la chemise chauffante est contrôlée par une unité programmable, la sortie d'énergie étant contrôlée par rapport à l'entrée au moins obtenue de mesures de température effectuées à l'intérieur du réacteur.

7. Procédé utilisant une unité de traitement selon l'une quelconque des revendications 1 à 6 pour la séparation d'au moins les protéines d'une matière première organique, ladite matière comprenant des composants durs tels que des os et similaires, comprenant les étapes consistant à :
a) fermer l'élément d'arrêt ;
b) disposer la matière première dans le conteneur du réacteur, dans lequel l'unité de pompage peut être agencée pour recycler/agiter et mélanger ainsi la matière première disposée dans le conteneur du réacteur ou en variante, pour pomper la matière du conteneur du réacteur lorsque l'élément d'arrêt est ouvert ;
c) ajouter optionnellement l'eau à la matière première ;
d) activer la pompe afin de vider le volume entre l'élément d'arrêt et la pompe ;
e) ouvrir l'élément d'arrêt pour permettre à la matière première d'entrer dans les moyens de déchiquetage ou de découpage ;
f) activer les moyens de pompage dans un mode de mélange pour mélanger la matière première et attirer la matière première à travers les moyens de découpage ou de déchiquetage, jusqu'à ce qu'une masse liquide sensiblement homogène soit présente dans le conteneur du réacteur, et, selon la matière première organique, une fraction sensiblement granulaire ;
g) ajouter un additif, tel que par exemple un conservateur, une enzyme ou substance similaire ;
h) poursuivre le processus de mélange jusqu'à ce que les additifs aient eu un temps de réaction suffisant ;
i) faire passer les moyens de pompage du mode de mélange au mode de pompage, ce qui permet de vider le conteneur du réacteur ;
j) selon l'additif, la masse liquide et la fraction granulaire, lorsque des conservateurs sont ajoutés, sont transférées aux récipients de stockage et, lorsque des enzymes sont utilisées en tant qu'additifs, la masse liquide et la fraction granulaire sont transférées vers un décanteur pour la séparation des protéines, huiles et sédiments ;
k) l'unité de traitement est prête pour le lot suivant, et peut éventuellement être nettoyée avant le cycle suivant.
